# EUROPÄISCHE PATENTSCHRIFT

(11) **EP 3 768 574 B1**
(45) Veröffentlichungstag und Bekanntmachung des Hinweises auf die Patenterteilung: **27.12.2023**
(21) Anmeldenummer: 19712707.9
(22) Anmeldetag: 14.03.2019
(51) Int. Cl.: B62D 5/00

(54) **STEER-BY-WIRE ARCHITEKTUREN**
STEER-BY-WIRE ARCHITECTURES
ARCHITECTURES À COMMANDE PAR CÂBLE ÉLECTRIQUE

(30) Priorität: 22.03.2018 DE 102018106872
(43) Veröffentlichungstag der Anmeldung: 27.01.2021
(73) Patentinhaber: thyssenkrupp Presta AG, 9492 Eschen (LI); thyssenkrupp AG, 45143 Essen (DE)
(72) Erfinder: SZEPESSY, Imre, 9493 Mauren (LI); HAMORI, Botond, 1026 Budapest (HU); KAKAS, Peter, 1118 Budapest (HU)
(74) Vertreter: thyssenkrupp Intellectual Property GmbH
(86) Internationale Anmeldenummer: PCT/EP2019/056366
(87) Internationale Veröffentlichungsnummer: WO 2019/179859

(56) Entgegenhaltungen:
- DE-A1- 10 053 335
- DE-A1- 10 112 514
- DE-A1-102018 116 367
- US-A1- 2004 026 158
- US-A1- 2006 253 726

## Beschreibung

Die vorliegende Erfindung betrifft ein Steer-by-Wire-Lenksystem für Kraftfahrzeuge mit den Merkmalen des Oberbegriffs des Anspruchs 1.

In Steer-by-Wire-Lenksystemen ist die Stellung der gelenkten Räder nicht direkt mit dem Lenkrad gekoppelt. Es besteht eine Verbindung zwischen dem Lenkrad und den gelenkten Rädern über elektrische Signale. An Stelle der mechanischen Kopplung werden ein Lenksteller zur Positionierung der Räder sowie ein Feedback-Aktuator zur Simulation der Rückstellkräfte am Lenkrad verwendet. Um die Sicherheitsanforderungen zu erfüllen, muss das Lenksystem so ausgebildet sein, dass die Funktionalität stets gegeben ist. Hauptsächlich wegen der entstehenden Kosten muss hier ein geeigneter Kompromiss zwischen dem Grad der Fehlertoleranz und der Zahl der redundanten Komponenten gefunden werden.

Ein Steer-by-wire-Lenksystem nach dem Oberbegriff des Anspruchs 1 ist aus DE 101 12 514 A1 bekannt.

Aus DE 100 53 335 A1 ist eine Steer-by-Wire Lenkanlage mit einem Lenkradmodul, einem Steer-by-Wire Steuergerät, einem Versorgungsmodul sowie einem als Lenkmodul bezeichneten Lenksteller bekannt. Das Versorgungsmodul weist mindestens zwei Spannungsquellen auf, so dass auch bei Ausfall einer Spannungsquelle eine sichere Energieversorgung der erfindungsgemäßen Steer-by-Wire Lenkanlage gewährleistet ist. Eine redundante Verbindung von dem Steer-by-Wire-Steuergerät und den anderen Modulen wird über Datenbusse hergestellt.

US 2004/0026158 A1 beschreibt ein Steer-by-Wire Lenksystem mit einer zentralen Steuereinheit die einen Lenkbefehl eines Fahrers auswertet und in Steuersignal für die Lenksteller umwandelt. Die Elektronik der Lenksteller und die Elektronik der zentralen Steuereinheit sind über zwei Datenübertragungsleitungen eines Lenk-Bussystems verbunden. Die Datenübertragungsleitungen des Lenk-Bussystems sind auch in Verbindung mit zwei voneinander unabhängigen Energiequellen. Die Signale der Lenksensoren, die den Lenkbefehl des Fahrers aufnehmen, werden ebenfalls über die Datenübertragungsleitungen des redundanten Bussystems an die zentrale Steuereinheit übertragen.

In US 2006/0253726 A1 ist eine fehlertolerante Architektur für ein verteiltes Steuersystem einer Kraftfahrzeuglenkung mit fehlertoleranten Modulen, einem drahtgebundenen Kommunikations-Bus und Funk-Transceivern beschrieben. Die fehlertoleranten Module kommunizieren mittels der Funk-Transceiver, falls die Kommunikation über den drahtgebundenen Bus durch einen Fehler beeinträchtigt ist. Wenn die Funkmodule aktiviert werden, kommunizieren sie über das feldbusbasierte TTP/C-Protokoll.

Es ist Aufgabe der vorliegenden Erfindung, ein Steer-by-Wire-Lenksystem für Kraftfahrzeuge anzugeben, das stets zuverlässig arbeitet, um die Sicherheitsziele zu erfüllen.

Diese Aufgabe wird von einem Steer-by-Wire-Lenksystem mit den Merkmalen des Anspruchs 1 gelöst. In den Unteransprüchen sind vorteilhafte Weiterbildungen der Erfindung genannt.

Demnach ist ein Steer-by-Wire-Lenksystem für Kraftfahrzeuge umfassend einen auf die gelenkten Räder wirkenden, in Abhängigkeit eines Fahrerlenkwunsches elektronisch geregelten Lenksteller und einen Rückwirkungen der Straße auf ein Steuer übertragenden Feedback-Aktuator, vorgesehen, wobei der Feedback-Aktuator und der Lenksteller eine redundante Stromversorgung aufweisen. Bei Ausfall einer Stromversorgung kann somit das Lenksystem zuverlässig weiterarbeiten.

Dabei ist bevorzugt, dass der Feedback-Aktuator und der Lenksteller jeweils mit einer ersten Stromversorgung und einer zweiten Stromversorgung verbunden sind.

Vorzugsweise sind die beiden Stromversorgungen derart ausgebildet, dass bei einem Ausfall einer der beiden Stromversorgungen die jeweils andere Stromversorgung dafür sorgt, dass der Feedback-Aktuator und der Lenksteller weiter betrieben werden können.

In einer Ausführungsform sind zusätzlich zwei redundante Kraftfahrzeugkommunikationskanäle vorgesehen, über die der Feedback-Aktuator jeweils sowohl mit dem Kraftfahrzeug als auch mit dem Lenksteller kommuniziert.

Es sind zwei redundante, private Kommunikationskanäle vorgesehen, über die der Feedback-Aktuator ausschließlich mit dem Lenksteller kommuniziert. Dabei können zwei redundant ausgebildete Kraftfahrzeugkommunikationskanäle vorgesehen sein, über die der Feedback-Aktuator mit dem Kraftfahrzeug kommuniziert, wobei die Kraftfahrzeugkommunikationskanäle und die privaten Kommunikationskanäle dazu ausgebildet sind, dass der Feedback-Aktuator relevante Signale von dem Kraftfahrzeug zu dem Lenksteller und vice versa überträgt.

Alternativ dazu kann aber auch vorgesehen sein, dass der Lenksteller mit dem Kraftfahrzeug über die zwei redundant ausgebildeten Kraftfahrzeugkommunikationskanäle kommuniziert. In diesem Fall sind die Kraftfahrzeugkommunikationskanäle und die privaten Kommunikationskanäle zwischen dem Feedback-Aktuator und dem Lenksteller dazu ausgebildet, dass der Lenksteller relevante Signale von dem Kraftfahrzeug zu dem Feedback-Aktuator und vice versa überträgt.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: ein Blockdiagramm einer Architektur eines Steer-by-Wire-Lenksystems als Vergleichsbeispiel,
- Fig. 3:: ein Blockdiagramm einer zweiten Architektur des Steer-by-Wire-Lenksystems als erstes Ausführungsbeispiel der Erfindung, sowie
- Fig. 4:: ein Blockdiagramm einer dritten Architektur des Steer-by-Wire-Lenksystems als zweites Ausführungsbeispiel der Erfindung.

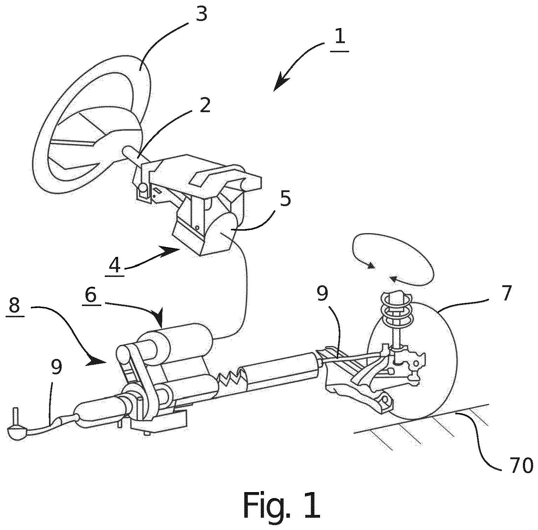

In der Figur 1 ist eine Steer-by-Wire-Lenkung 1 gezeigt. An einer Lenkwelle 2 ist ein nicht dargestellter Drehwinkelsensor angebracht, welcher das durch Drehen des Lenkrads 3 aufgebrachte Fahrerlenkmoment erfasst. Des Weiteren ist an der Lenkwelle 2 ein Feedback-Aktuator 4 angebracht, welcher dazu dient, die Rückwirkungen von der Fahrbahn 70 auf das Lenkrad 3 zu übertragen und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 über Signalleitungen an eine Steuereinheit 5 übertragen. Die Steuereinheit 5 steuert in Abhängigkeit des Signals vom Drehwinkelsensor sowie weiteren Eingangsgrößen, wie z. B. Fahrzeuggeschwindigkeit, Gierrate und dergleichen einen elektrischen Lenksteller 6, auch Lenkungsaktuator genannt, an, welcher die Stellung der gelenkten Räder 7 steuert. Der Lenksteller 6 bewirkt mittels eines Gewindetriebes 8 eine axiale Verlagerung einer Zahnstange. Die gelenkten Räder 7 sind über Spurstangen 9 mit der Zahnstange verbundenen.

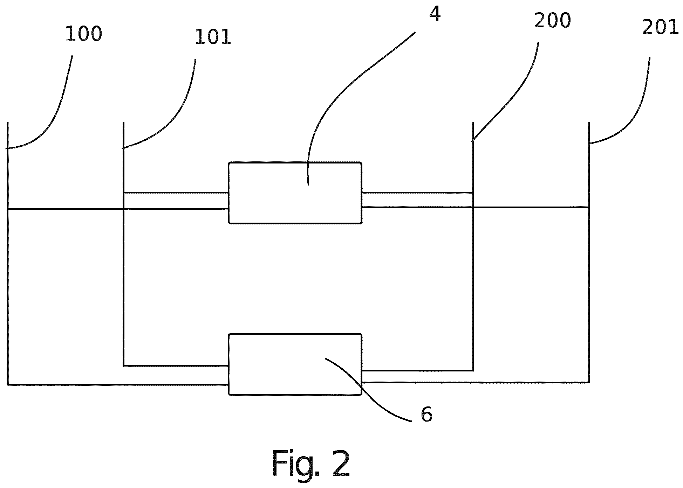

Figur 2 zeigt ein Vergleichsbeispiel einer Verkabelungsarchitektur für ein Steer-by-Wire-Lenksystem. Der Feedback-Aktuator 4 kommuniziert auf zwei Kraftfahrzeugkommunikationskanälen 100, 101 jeweils sowohl mit dem Kraftfahrzeug als auch mit dem Lenksteller 6. Alle benötigten Signale werden auf beiden Fahrzeugkommunikationskanälen 100, 101 zwischen dem Kraftfahrzeug und dem Steer-by-Wire-System 1 und zwischen dem Lenksteller 6 und dem Feedback-Aktuator 4 übertragen. Die beiden Kraftfahrzeugkommunikationskanäle 100, 101 sind redundant ausgebildet. Bei einem Ausfall einer der Kraftfahrzeugkommunikationskanäle 100, 101 kann der andere Kraftfahrzeugkommunikationskanal 101, 100 die Kommunikation vollständig übernehmen, so dass das System ordnungsgemäß weiterarbeiten kann.

Weiterhin ist eine redundante Stromversorgung sowohl für den Feedback-Aktuator 4 als auch für den Lenksteller 6 vorgesehen. Der Feedback-Aktuator 4 und der Lenksteller 6 sind jeweils mit einer ersten Stromversorgung 200 und einer zweiten Stromversorgung 201 verbunden. Bei einem Ausfall einer der beiden Stromversorgungen 200, 201 gewährleistest die andere, fehlerfreie Stromversorgung 201, 200, dass der Feedback-Aktuator 4 und der Lenksteller 6 weiter betrieben werden können.

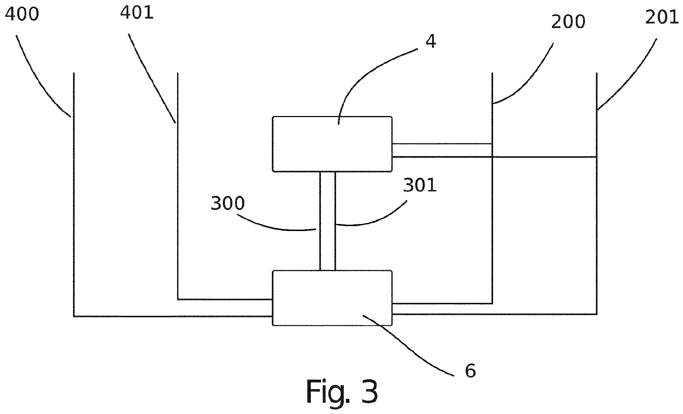

Figur 3 zeigt als erstes Ausführungsbeispiel der Erfindung eine zweite Verkabelungsarchitektur für eine Steer-by-Wire-Lenkung. Der Feedback-Aktuator 4 kommuniziert auf zwei redundanten, privaten Kommunikationskanälen 300, 301 mit dem Lenksteller 6. Bei einem Ausfall eines privaten Kommunikationskanals 300, 301 kann das System auf den zweiten privaten Kommunikationskanal 301, 300 zurückgreifen, der ebenfalls alle Signale überträgt, die für den Betrieb der Steer-by-Wire-Lenkung benötigt werden. Der Lenksteller 6 kommuniziert über das Kraftfahrzeugkommunikationsnetz mit dem Kraftfahrzeug und überträgt die relevanten Signale von dem Kraftfahrzeug zu dem Feedback-Aktuator 4 und vice versa über die privaten Kommunikationskanäle 300, 301. Dazu sind zwei redundant ausgebildete Kraftfahrzeugkommunikationskanäle 400, 401 vorgesehen. Bei einem Ausfall einer der Kraftfahrzeugkommunikationskanäle 400, 401 kann der andere Kraftfahrzeugkommunikationskanal 401, 400 die Kommunikation vollständig übernehmen, so dass das System ordnungsgemäß weiterarbeiten kann. Der Feedback-Aktuator 4 weist dabei keinen unmittelbaren Kommunikationskanal zu dem Kraftfahrzeug auf. Er kommuniziert stets über den Lenksteller 6 mit dem Kraftfahrzeug. Weiterhin ist eine redundante Stromversorgung sowohl für den Feedback-Aktuator 4 als auch für den Lenksteller 6 vorgesehen. Der Feedback-Aktuator 4 und der Lenksteller 6 sind jeweils mit einer ersten Stromversorgung 200 und einer zweiten Stromversorgung 201 verbunden. Bei einem Ausfall einer der beiden Stromversorgungen 200, 201 gewährleistest die andere, fehlerfreie Stromversorgung 201, 200, dass der Feedback-Aktuator 4 und der Lenksteller 6 weiter betrieben werden können.

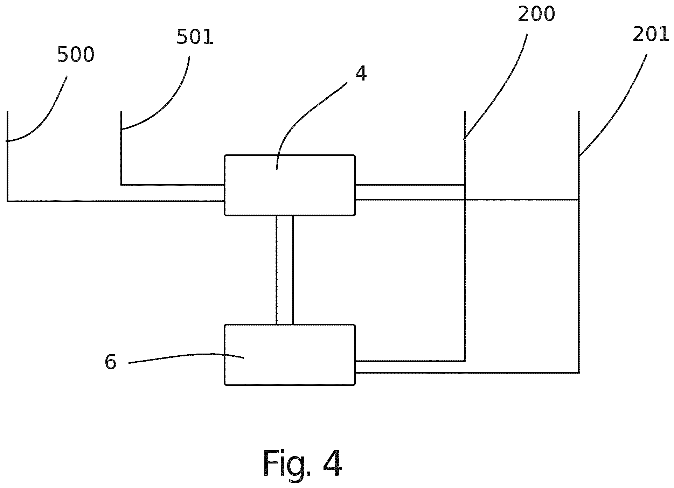

Figur 4 zeigt als zweites Ausführungsbeispiel der Erfindung eine dritte Verkabelungsarchitektur für eine Steer-by-Wire-Lenkung. Der Feedback-Aktuator 4 kommuniziert auf zwei redundanten, privaten Kommunikationskanälen mit dem Lenksteller 6. Bei einem Ausfall eines privaten Kommunikationskanals kann das System auf den zweiten privaten Kommunikationskanal zurückgreifen, der ebenfalls alle Signale überträgt, die für den Betrieb der Steer-by-Wire-Lenkung benötigt werden. Der Feedback-Aktuator 4 kommuniziert über das Kraftfahrzeugkommunikationsnetz mit dem Kraftfahrzeug und überträgt die relevanten Signale von dem Kraftfahrzeug zu dem Lenksteller 6 und vice versa über die privaten Kommunikationskanäle. Dazu sind zwei redundant ausgebildete Kraftfahrzeugkommunikationskanäle 500, 501 vorgesehen. Bei einem Ausfall einer der Kraftfahrzeugkommunikationskanäle 500, 501 kann der andere Kraftfahrzeugkommunikationskanal 501, 500 die Kommunikation vollständig übernehmen, so dass das System ordnungsgemäß weiterarbeiten kann. Der Lenksteller 6 weist dabei keinen unmittelbaren Kommunikationskanal zu dem Kraftfahrzeug auf. Er kommuniziert stets über den Feedback-Aktuator 4 mit dem Kraftfahrzeug.

Weiterhin ist eine redundante Stromversorgung sowohl für den Feedback-Aktuator 4 als auch für den Lenksteller 6 vorgesehen. Der Feedback-Aktuator 4 und der Lenksteller 6 sind jeweils mit einer ersten Stromversorgung 200 und einer zweiten Stromversorgung 201 verbunden. Bei einem Ausfall einer der beiden Stromversorgungen 200, 201 gewährleistest die andere, fehlerfreie Stromversorgung 201, 200, dass der Feedback-Aktuator 4 und der Lenksteller 6 weiter betrieben werden können.

## Patentansprüche

1. Steer-by-Wire-Lenksystem (1) für Kraftfahrzeuge aufweisend einen auf die gelenkten Räder (7) wirkenden, in Abhängigkeit eines Fahrerlenkwunsches elektronisch geregelten Lenksteller (6), und einen Rückwirkungen der Straße (70) auf ein Steuer übertragenden Feedback-Aktuator (4), wobei der Feedback-Aktuator (4) und der Lenksteller (6) eine redundante Stromversorgung (200, 201) aufweisen und das Steer-by-Wire-Lenksystem zwei redundante, private Kommunikationskanäle (300, 301) umfasst, über die der Feedback-Aktuator (4) mit dem Lenksteller (6) kommuniziert, **dadurch gekennzeichnet, dass**
das Steer-by-Wire-Lenksystem zwei redundant ausgebildete Kraftfahrzeugkommunikationskanäle (500, 501) umfasst, über die der Feedback-Aktuator (4) mit dem Kraftfahrzeug kommuniziert, wobei die Kraftfahrzeugkommunikationskanäle (500, 501) und die privaten Kommunikationskanäle dazu ausgebildet sind, dass der Feedback-Aktuator (4) relevante Signale von dem Kraftfahrzeug zu dem Lenksteller (6) und vice versa über die privaten Kommunikationskanäle (300, 301) überträgt oder
das Steer-by-Wire-Lenksystem zwei redundant ausgebildete Kraftfahrzeugkommunikationskanäle (400, 401) umfasst, über die der Lenksteller (6) mit dem Kraftfahrzeug kommuniziert, wobei die Kraftfahrzeugkommunikationskanäle (400, 401) und die privaten Kommunikationskanäle (300, 301) dazu ausgebildet sind, dass der Lenksteller (6) relevante Signale von dem Kraftfahrzeug zu dem Feedback-Aktuator (4) und vice versa über die privaten Kommunikationskanäle (300, 301) überträgt.

2. Steer-by-Wire-Lenksystem nach Anspruch 1, **dadurch gekennzeichnet, dass** der Feedback-Aktuator (4) und der Lenksteller (6) jeweils mit einer ersten Stromversorgung (200) und einer zweiten Stromversorgung (201) verbunden sind.

3. Steer-by-Wire-Lenksystem nach Anspruch 2, **dadurch gekennzeichnet, dass** die beiden Stromversorgungen (200, 201) derart ausgebildet sind, dass bei einem Ausfall einer der beiden Stromversorgungen (200, 201) die jeweils andere Stromversorgung (200, 201) dafür sorgt, dass der Feedback-Aktuator (4) und der Lenksteller (6) weiter betrieben werden können.

## Claims

1. A steer-by-wire steering system (1) for motor vehicles having an electronically controlled steering actuator (6) acting on the steered wheels (7) depending on a driver's steering demand, and a feedback actuator (4) transmitting retroactive effects of the road (70) to a steering wheel, wherein the feedback actuator (4) and the steering actuator (6) have a redundant power supply (200, 201) and wherein the steer-by-wire steering system comprises two redundant private communication channels (300, 301), by means of which the feedback actuator (4) communicates with the steering actuator (6), **characterized in that** the steer-by-wire steering system comprises two redundantly designed motor vehicle communication channels (500, 501), by means of which the feedback actuator (4) communicates with the motor vehicle, wherein the motor vehicle communication channels (500, 501) and the private communication channels are designed in such a way that the feedback actuator (4) transmits relevant signals from the motor vehicle to the steering actuator (6) and vice versa via the private communication channels (300, 301) or
the steer-by-wire steering system comprises two redundantly designed motor vehicle communication channels (400, 401) by means of which the steering actuator (6) communicates with the motor vehicle, wherein the motor vehicle communication channels (400, 401) and the private communication channels (300, 301) are designed in such a way that the steering actuator (6) transmits relevant signals from the motor vehicle to the feedback actuator (4) and vice versa via the private communication channels (300, 301).

2. The steer-by-wire steering system as claimed in claim 1, **characterized in that** the feedback actuator (4) and the steering actuator (6) are each connected to a first power supply (200) and a second power supply (201).

3. The steer-by-wire steering system as claimed in claim 2, **characterized in that** the two power supplies (200,201) are designed in such a way that in the event of a failure of one of the two power supplies (200,201), the respective other power supply (200,201) ensures that the feedback actuator (4) and the steering actuator (6) can continue to be operated.

## Revendications

1. Système de direction Steer-by-Wire (1) pour véhicules automobiles, présentant un actionneur de direction (6) agissant sur les roues directrices (7) et régulé électroniquement en fonction d'un souhait de direction du conducteur, et un actionneur à rétroaction (4) transmettant des rétroactions de la route (70) à une commande, l'actionneur à rétroaction (4) et l'actionneur de direction (6) présentant une alimentation électrique redondante (200, 201) et le système de direction Steer-by-Wire comprenant deux canaux de communication privés redondants (300, 301), par lesquels l'actionneur à rétroaction (4) communique avec l'actionneur de direction (6), **caractérisé en ce que**
le système de direction Steer-by-Wire comprend deux canaux de communication de véhicule automobile (500, 501) conçus de manière redondante, par lesquels l'actionneur à rétroaction (4) communique avec le véhicule automobile, les canaux de communication de véhicule automobile (500, 501) et les canaux de communication privés étant conçus pour que l'actionneur à rétroaction (4) transmette des signaux pertinents du véhicule automobile à l'actionneur de direction (6) et vice versa par l'intermédiaire des canaux de communication privés (300, 301), ou
le système de direction Steer-by-Wire comprend deux canaux de communication de véhicule automobile (400, 401) conçus de manière redondante, par lesquels l'actionneur de direction (6) communique avec le véhicule automobile, les canaux de communication de véhicule automobile (400, 401) et les canaux de communication privés (300, 301) étant conçus pour que l'actionneur de direction (6) transmette des signaux pertinents du véhicule automobile à l'actionneur à rétroaction (4) et vice versa par le biais des canaux de communication privés (300, 301).

2. Système de direction Steer-by-Wire selon la revendication 1, **caractérisé en ce que** l'actionneur à rétroaction (4) et l'actionneur de direction (6) sont reliés respectivement à une première alimentation électrique (200) et à une deuxième alimentation électrique (201).

3. Système de direction Steer-by-Wire selon la revendication 2, **caractérisé en ce que** les deux alimentations électriques (200, 201) sont conçues de telle sorte qu'en cas de défaillance de l'une des deux alimentations électriques (200, 201), l'autre alimentation électrique respective (200, 201) veille à ce que l'actionneur à rétroaction (4) et l'actionneur de direction (6) puissent continuer à fonctionner.
